# EUROPÄISCHE PATENTSCHRIFT

(11) **EP 2 028 791 B1**
(45) Veröffentlichungstag und Bekanntmachung des Hinweises auf die Patenterteilung: **04.07.2012**
(21) Anmeldenummer: 08013818.3
(22) Anmeldetag: 01.08.2008
(51) Int. Cl.: H04L 12/24, G06F 11/00

(54) **Erkennung von Fehlkonfigurationen auf Netzwerkinfrastrukturgeräten**
Recognition of incorrect configurations on network infrastructure devices
Reconnaissance de configurations erronées sur des appareils d'infrastructure en réseau

(30) Priorität: 21.08.2007 DE 102007039484
(43) Veröffentlichungstag der Anmeldung: 25.02.2009
(73) Patentinhaber: Hirschmann Automation and Control GmbH, 72654 Neckartenzlingen (DE)
(72) Erfinder: Rentschler, Markus, 72581 Dettlingen (DE); Kleineberg, Oliver, 73240 Wendlingen (DE)
(74) Vertreter: Greif, Thomas

(56) Entgegenhaltungen:
- US-A1- 2005 204 027
- US-B1- 7 126 964
- US-B1- 7 228 346

## Beschreibung

Die Erfindung betrifft ein Verfahren zur Erkennung von Fehlkonfigurationen auf Netzwerkinfrastrukturgeräten, wobei ein jeweiliges Netzwerkinfrastrukturgerät Informationen über die eigene Konfiguration an der eigenen Netzwerkschnittstelle bereitstellt und mittels eines Discovery Protokolls diese Informationen an ein Nachbar-Netzwerkinfrastrukturgerät versendet, gemäß den Merkmalen des Oberbegriffes des Patentanspruches 1.

Stand der Technik ist die Übemuittelung von Informationen zwischen Infrastrukturgeräten mittels Discovery Protokollen.

In der US 2005/204027 A1 ist ein Managementsystem für Netzwerkgeräte beschrieben, das eine verteilte Verarbeitung der Netzmanagementaufgaben auf verschiedene Netzwerktellnehmer unter Abkopplung der Managementaufgaben von der vermittelnden Netzwerkstruktur vorsieht. Diese amerikanische Patentanmeldung beschreibt somit eine Verteilung von Aufgaben des Netzwerkmanagements, die üblicherweise von einer zentralisierten, verarbeitenden Instanz eines Netzwerkmanagementsystems wahrgenommen werden, auf dezentrale Knoten eines Netzwerkes. Hierbei kann eine physikalische oder systematische Korrelation zwischen den verarbeiteten Daten auf dem jeweiligen Knoten und der zugehörigen Netzwerkschnittstelle(n) existieren, die Verteilung auf verschiedene verarbeitende Instanzen kann aber beispielsweise zum Zweck der Lastverteilung oder Abstraktion von festen Schnittstellen erfolgen.

Viele moderne Infrastrukturgeräte unterstützen mindestens eine Form eines Dlscovery Protokolls wie beispielsweise das von der IEEE(Institute of Electrical and Electronics Engineers) standardisierte LLDP (Link Layer Discovery Protocol), das durch die Firma Microsoft entwickelte SSDP (Simple Service Discovery Protocol) oder das durch die Firma Cisco entwickelten CDP (Cisco Discovery Protocol), um Informationen über die eigene Konfiguration an den eigenen Netzwerkschnittstellen zu versenden. Zweck dieser Informationspakete ist die Benachrichtigung direkt verbundener Nachbargeräte über die eigene Anwesenheit und gegebenenfalls Konfiguration der eigenen Schnittstellen. Nachbargeräte sind hierbei Geräte, die mittels PDUs der Discovery Protokolle direkt erreichbar sind.

Im Nachfolgenden werden Geräte, die für den Betrieb des Netzwerks, beispielsweise als (zentrale) Vermittlungseinheit, notwendig sind, als "Geräte" oder "Infrastrukturgeräte" oder "Netzwerkinlrastrukturgeräte" bezeichnet. Beispielhaft für solche Geräte sind Ethernetswitche oder Router.

Geräte, die nicht als aktive Komponenten für den Netzbetrieb notwendig sind, sondern das zur Verfügung gestellte Netz für den Produktivbetrieb nutzen, werden nachfolgend als "Clients" bezeichnet. Beispielhaft für Clients wären Notebooks, Personal Computer oder die Steuerungseinheiten von Maschinen mit Ethernetschnittstellen.

Viele moderne Infrastrukturgeräte unterstützen mindestens eine Form eines Discovery Protokolls, wie zum Beispiel das von der IEEE (Institute of Electrical and Electronics Engineers) standardisierte LLDP (Link Layer Discovery Protocol) oder das proprietäre CDP (Cisco Discovery Protocol), um Informationen über die eigene Konfiguration an den eigenen Netzwerkschnittstellen zu versenden. Zweck dieser Informationspakete ist die Benachrichtigung direkt verbundener Nachbargeräte über die eigene Anwesenheit und gegebenenfalls Konfiguration der eigenen Schnittstellen.

Der Versand der Konfigurationsdaten, sogenannte informations PDUs (Protocol Data Units), erfolgt quasi verbindungslos, d.h. jeder Switch stellt lediglich an seinen Schnittstellen seine eigenen Informations PDUs zur Verfügung, unabhängig davon, ob ein empfangendes Gerät verbunden ist oder nicht.

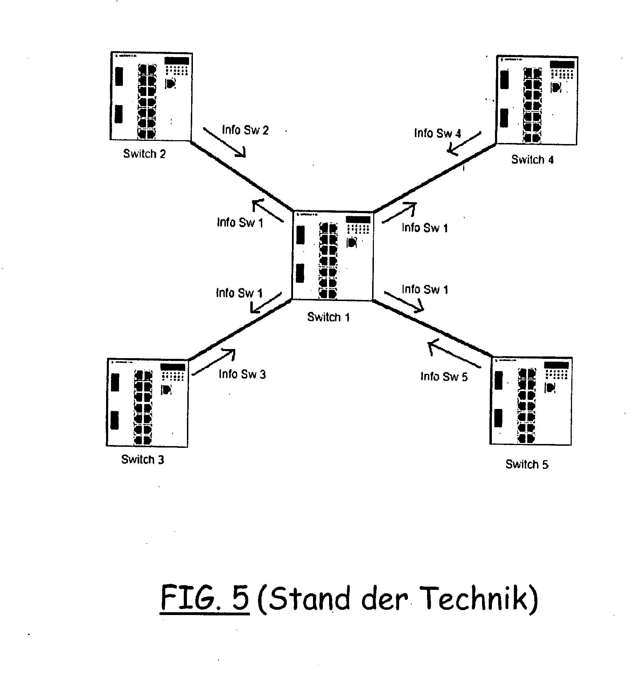

Unterstützen in einer Netzwerkinfrastruktur alle Geräte ein bestimmtes Discovery Protokoll, so sendet jedes Gerät die eigenen Informationen auf allen Schnittstellen, und empfängt und wertet die Informationen des direkten Nachbarn an der jeweiligen Schnittstelle aus, Ober die dieser Nachbar verbunden ist (Siehe Figur 5).

Weiterhin nimmt jedes Gerät die an seinen Schnittstellen empfangenen Informations PDUs vom Netz, um die Weitervermittlung an andere Infrastrukturgeräte zu verhindern, da immer nur jeweils die direkten Nachbarn eines Gerätes die jeweiligen PDUs empfangen sollen.

Die über die Informations PDUs empfangenen Daten der Nachbargeräte werden auf jedem einzelnen Gerät üblicherweise in einer Datenstruktur, der sogenannten MIB (Management Information Base) gespeichert.

Auf diese MIB kann über eine Managerneritschnittstelle, wie z.B. das SNMP (Simple Network Management Protocol), zugegriffen und die aktuellen Nachbarinformationen ausgelesen werden.

Zusätzlich zu den von den Nachbarn erhaltenen Informationen speichert jedes Gerät üblicherweise ebenfalls die Konfiguration seiner eigenen Schnittstellen in der MIB ab. Hierbei kann es je nach Konfiguration der Geräte zu Abweichungen infolge unterschiedlicher Einstellungen bei der vorgenommenen Konfiguration kommen.

Aufgabe dieser Erfindung ist daher die Erkennung von Fehlkonfigurationen auf Netzwerkinfrastrukturgeräten

Ziel der Erfindung ist die Beschreibung von Verfahren, mit denen die über Discovery Protokolle (wie z.B. LLDP) auf den Netzwerkinfrastrukturgeräten verfügbaren Nachbarinformationen für die Erkennung von Konfigurationsfehlern zwischen dem lokalen und dem entfernten Gerät genutzt werden können.

Diese Aufgabe wird von den Merkmalen des Patentanspruches 1 gelöst.

Erfindungsgemäß ist vorgesehen, dass die von der Speichereinheit des einen Netzwerkinfrastrukturgeräte zur Verfügung gestellten Informationen über die Nachbar-Netzwerkinfrastrukturgeräte zur Erkennung von Fehlkonfigurationen zwischen den jeweiligen Geräten durch Vergleich der in der Speichereinheit abgelegten Daten genutzt werden.

Die Erkennung von Fehlkonfigurationen erfolgt dabei wie folgt beschrieben:

Die von der Speichereinheit (MIB) zur Verfügung gestellten Informationen über die Nachbargeräte und die lokalen Geräte können zur Erkennung von Fehlkonfigurationen zwischen den jeweiligen Geräten genutzt werden.

Hierfür wird für jedes über das Discovery Protokoll erkannte Gerät die in der MIB vorhandenen Informationen für die Schnittstelle am abgefragten Gerät und die Schnittstelle am Nachbargerät ermittelt.

Nachfolgend werden die Informationen gegeneinander ausgewertet, woraus sich eine aus vielen möglichen Konstellationen der Schnittstellenkonfiguration ergibt.

Diese Konstellation wird nachfolgend von einer Auswertelogik bewertet. Die Auswertung ermittelt, abhängig von der bestehenden Konstellation, fehlerfreie oder fehlerbehaftete Konfigurationen zwischen den zwei Geräten.

Diese Informationen können nun über eine Schnittstelle zum Endbenutzer ausgegeben werden, um diesen über das Problem in der Gerätekonfiguration zu informieren.

Ein konkretes Beispiel wären zwei Netzwerkswitche, die über ein Twisted Pair Kupferkabel miteinander verbunden sind. Auf dem lokalen Gerät, also dem Gerät auf das z.B. über SNMP auf die MIB zugegriffen wird, ist die Netzwerkschnittstelle an der das Nachbargerät angeschlossen ist auf 100 MBit Full Duplex Automatisch konfiguriert.

Auf dem Nachbargerät ist die Netzwerkschnittstelle, an die das lokale Gerät angeschlossen ist auf 100 MBit Full Duplex Manuell konfiguriert.

Diese Konstellation kann unter Umständen zu Problemen im Betrieb führen. Die Auswertelogik vergleicht die Informationen der lokalen Schnittstelle und der Nachbarschnittstelle und ermittelt dieses Konfigurationsproblem. Nachfolgend wird das Problem in der Administrationsoberfläche des Switches dem Benutzer gemeldet.

Weiterhin ist eine Nutzung der lokalen Fehlererkennung für die globale Fehlererkennung möglich. Die bisher beschriebene Fehlererkennung bietet für jedes Infrastrukturgerät einzeln eine Fehlererkennung im Kontext des jeweils lokalen Gerätes.

Da diese Fehlererkennung auf jedem Gerät einzeln durchgeführt werden kann, stehen für jedes Gerät jeweils lokale Fehlererkennungsdaten in der Gesamtheit der Infrastruktur zur Verfügung.

Wenn diese jeweils lokalen Daten einer übergeordneten Instanz, z.B. einer Softwarekomponente für das Netzwerkmanagement zur Verfügung gestellt werden, so können über die lokalen Daten netzwerkübergreifende Fehler erkannt werden, wie beispielsweise über verschiedene Switche falsch konfigurierte VLANs (Virtual Local Area Networks) im Kontext des gesamten Netzwerks.

Der Einsatz der Fehlererkennung ist also nicht zwingend auf einen gerätebezogenen Kontext beschränkt, also beispielsweise die Darstellung in der Managementschnittstelle eines einzelnen Infrastrukturgerätes, sondern kann auch innerhalb einer übergeordneten Managementinstanz wie beispielsweise einer Softwarekomponente für das Netzwerkmanagement erfolgen.

Eine Ausführung der Erfindung, auf die diese jedoch nicht beschränkt ist, ist im Folgenden erläutert und anhand der Figuren beschrieben.

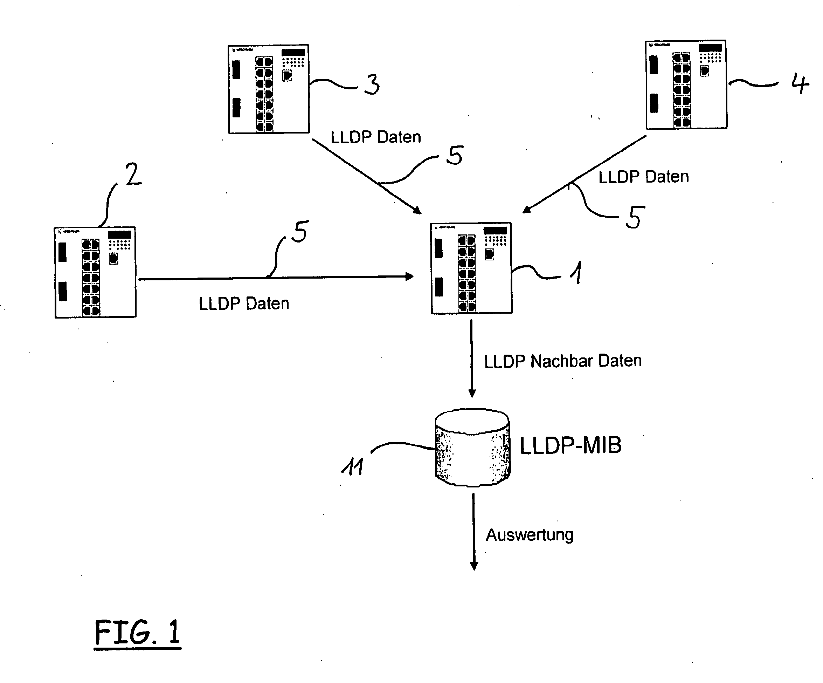

In Figur 1 ist eine Netzwerkinfrastruktur gezeigt, innerhalb derer mehrere Netzwerkinfrastrukturgeräte 1 bis 4 angeordnet sind, die über entsprechende Datenleitungen 5 miteinander verbunden sind. Eines dieser Netzwerkinfrastrukturgeräte 1 sammelt über die Datenleitungen 5 die Konfigurationsdaten der übrigen angeschlossenen Netzwerkinfrastrukturgeräte 2 bis 4, wozu diese Daten mittels eines Discovery-Protokolls, beispielsweise LLDP, an das Netzwerkinfrastrukturgerät 1 übertragen und dort gesammelt werden. In dem Netzwerkinfrastrukturgerät 1 ist eine Speichereinheit 11, beispielsweise eine LLDP-MIB, vorhanden, in der die übertragenen Konfigurationsdaten der Netzwerkinfrastrukturgeräte 2 bis 4 und auch des sammelnden Netzwerkinfrastrukturgerätes 1 abgespeichert werden. Die von der Speichereinheit 11 des einen Netzwerkinfrastrukturgerätes 1 zur Verfügung gestellten Informationen über die Nachbar-Netzwerkinfrastrukturgeräte 2 bis 4 und seiner eigenen Informationen werden zur Erkennung von Fehlkonfigurationen zwischen den jeweiligen Geräten durch Vergleich der in der Speichereinheit 11 abgelegten Daten genutzt.

Dies erfolgt beispielsweise dadurch, dass über das Discovery-Protokoll, wie beispielsweise LLDP oder ein anderes, die in der Speichereinheit 11 vorhandenen Informationen für die Schnittstelle am abgefragten Netzwerkinfrastrukturgerät 1 und die Schnittstelle am Nachbar-Netzwerkinfrastrukturgerät 2 oder 3 oder 4 ermittelt und nachfolgend die Informationen gegeneinander ausgewertet werden (wozu das jeweilige Netzwerkinfrastrukturgerät 1 die nötige Hard- und Software aufweist), woraus sich eine aus vielen möglichen Konstellationen der Schnittstellenkonfiguration ergibt. Das bedeutet, dass die einzelnen Konfigurationen der Netzwerkinfrastrukturgeräte 1 bis 4 in eine Tabelle eingetragen und verglichen werden können, wobei sich Fehlerfreiheit ergibt, wenn die über eine Datenleitung 5 miteinander verbundenen Netzwerkinfrastrukturgeräte (beispielsweise 1 mit 2 oder 1 mit 3 oder 1 mit 4 bei der Netzwerkinfrastruktur gemäss Figur 1) übereinstimmen oder ein Fehler vorliegt, wenn die genannten Konfigurationen der einander verbundenen Netzwerkinfrastrukturgeräte voneinander abweichen.

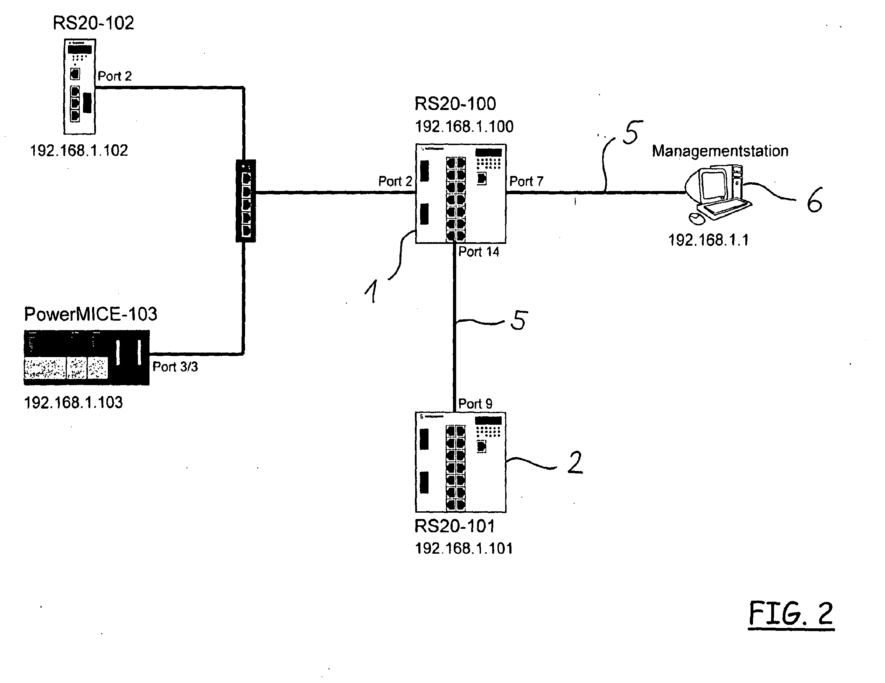

Figur 2 zeigt die Netzwerkinfrastruktur ausschnittsweise, wie sie gemäss Figur 1 vorhanden ist. Das bedeutet, dass das Netzwerkinfrastrukturgerät 1 die Speichereinheit 11 aufweist und an ihm das Netzwerkinfrastrukturgerät 2 angeschlossen ist. Daneben sind weitere Clients, z. B. der RS 20-102 oder der Power MICE 103 angeschlossen. Das Netzwerkinfrastrukturgerät 1 stellt die lokalen Konfigurationsdaten (seine eigenen und die des Netzwerkinfrastrukturgerätes 2 oder auch weiterer Netzwerkinfrastrukturgeräte) einer übergeordneten Netzwerkmanagement-Einheit 6 zur Verfügung, um so über die lokalen Konfigurationsdaten der Netzwerkinfrastrukturgeräte 1, 2 und weiterer Netzwerk übergreifende Fehler zu erkennen und beheben zu können.

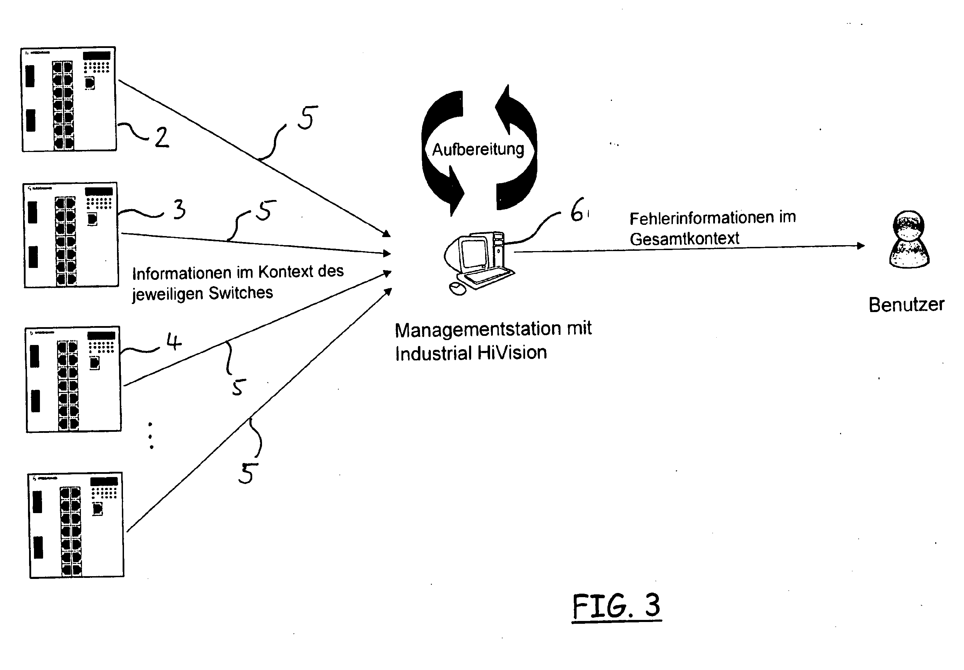

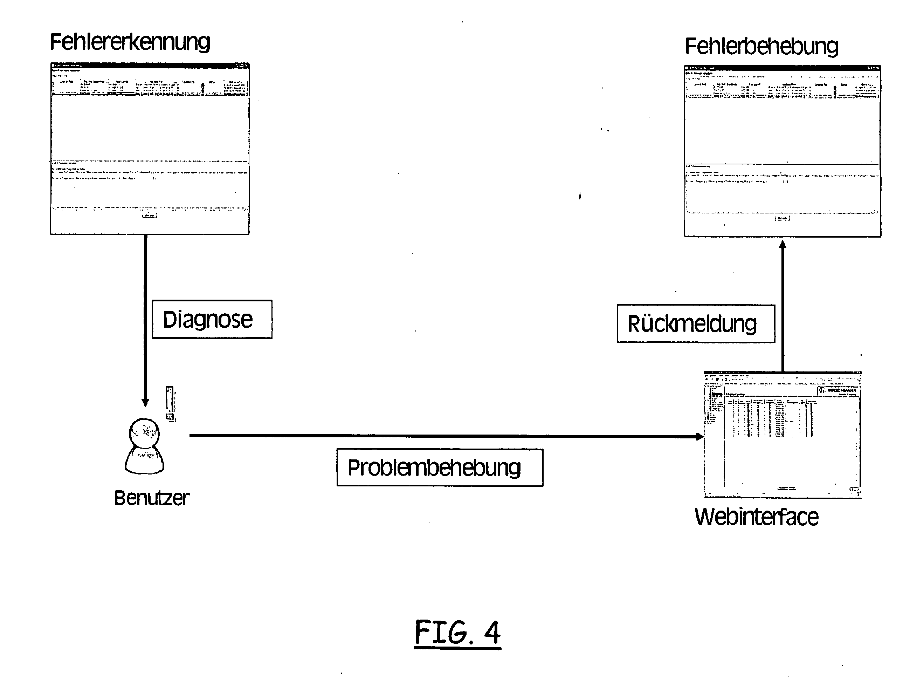

Diese übergreifende Fehlererkennung ist in Figur 3 dargestellt, aus der hervorgeht, dass mehrere Netzwerkinfrastrukturgeräte 1 bis 4 (ggf. auch mehrere) über entsprechende Datenleitungen an der Netzwerkmanagement-Einheit 6 angeschlossen sind. Jedes der Netzwerkinfrastrukturgeräte 1 bis 4, wie sie in Figur 3 dargestellt sind, funktionieren als dasjenige Netzwerkinfrastrukturgerät, welches die Funktionalität des Netzwerkinfrastrukturgerätes 1 gemäss Figur 1 übernimmt. Somit ist es möglich, innerhalb einer komplexen Netzwerktopologie Fehler zu erkennen, in der Netzwerkmanagement-Einheit 6 aufzubereiten und einem Benutzer Fehlerinformationen im Gesamtkontext der Netzwerktopologie zur Verfügung zu stellen. Dadurch wird es möglich, dass ein Fehler innerhalb der Konfiguration von angeschlossenen Geräten in einer Netzwerkinfrastruktur erkannt wird und diese einem Benutzer zur Verfügung gestellt wird. Dieser Benutzer kann durch entsprechenden Eingriff die Konfigurationsdaten der einander zugeordneten Netzwerkinfrastrukturgeräte ändern und angleichen, so dass keine Abweichung voneinander mehr gegeben ist und dadurch das Problem behoben wird. Diese Problembehebung kann dann in der Netzwerkmanagement-Einheit angezeigt werden, wodurch für den Benutzer erkennbar ist, dass der Fehler behoben worden ist. Diese Rückkopplung aus Fehlererkennung, Anzeige an den Benutzer, Problembehebung, Rückmeldung und Anzeige der Fehlerbehebung ist in Figur 4 dargestellt.

Dabei ist denkbar, dass die der Fehlererkennung nachgehende Fehlerbehebung durch einen Benutzer, insbesondere einen Systemadministrator, manuell durchgeführt wird, oder dass alternativ die der Fehlererkennung nachgehende Fehlerbehebung automatisiert erfolgt. Die der Fehlererkennung nachgehende Fehlerbehebung durch einen Benutzer hat den Vorteil, dass bewusst in die Netzwerkinfrastruktur zwecks Fehlerbehebung eingegriffen wird und der Benutzer auch Kenntnis von Fehlern und deren Behebung bekommt. Wichtig ist dabei, dass der Benutzer erkennen kann, ob überhaupt der feststegestellte Fehler tatsächlich ein Fehler ist und, wenn ja, auf welche Art und Weise er ihn beheben will. Wird dies nicht gewünscht, erfolgt die Fehlerbehebung automatisch nach programmierten Abläufen, da dies zum Beispiel bei Standardfehlern schneller erfolgen kann und sich der Benutzer nicht einschalten muss. Er kann jedoch den Vorgang angezeigt bekommen, so dass er lediglich noch über einen Fehler und dessen automatische Behebung informiert ist.

## Patentansprüche

1. Verfahren zur Erkennung von Fehlkonfigurationen auf Netzwerkinfrastrukturgeräten, wobei ein jeweiliges lokales Netzwerkinfrastrukturgerät (1) Informationen über die eigene Konfiguration an der eigenen Netzwerkschnittstelle bereitstellt und mittels eines Discovery-Protokolls diese Informationen an seine Nachbar-Netzwerkinfrastrukturgeräte (2 bis 4) versendet, wobei die Nachbar-Netzwerkinfrastrukturgeräte (2 bis 4) über das Discovery-Protokoll ihre konfigurations. Daten an das lokale Netzwerkinfrastrukturgerät (1) übertragen, wobei weiterhin jedes Netzwerkinfrastrukturgerät (1 bis 4) die an seinen Schnittstellen empfangenen Konfigurationsdaten der Nachbar-Netzwerkinfrastrukturgeräte vom Netz nimmt, um die Weitervermittlung an andere Netzwerkinfrastrukturgeräte zu verhindern, die nicht Nachbarn im Sinne der direkten Erreichbarkeit sind, wobei weiterhin die von dem lokalen Netzwerkinfrastrukturgerät (1) empfangenen Konfigurationsdaten der direkten Nachbar-Netzwerkinfrastrukturgeräte (2 bis 4) in einer Speichereinheit auf dem lokalen Netzwerkinfrastrukturgerät (1) als Datenstruktur hinterlegt werden, wobei die in der Speichereinheit des lokalen Netzwerkinfrastrukturgerätes (1) hinterlegten empfangenen Daten der direkten Nachbar-Netzwerkinfrastrukturgeräte (2 bis 4) für einen Vergleich mit den Daten des lokalen Netzwerkinfrastrukturgerätes (1) genutzt werden.

2. Verfahren nach Anspruch 1, **dadurch gekennzeichnet, dass** über das Discovery Protokoll die in der Speichereinheit vorhandenen Informationen für die Schnittstelle am abgefragten Netzwerkinfrastrukturgerät und die Schnittstelle am Nachbar-Netzwerkinfrastrukturgerät ermittelt und nachfolgend die Informationen gegeneinander ausgewertet werden, woraus sich eine aus vielen möglichen Konstellationen der Schnittstellenkonfiguration ergibt.

3. Verfahren nach Anspruch 2, **dadurch gekennzeichnet, dass** diese festgestellten Konstellationen von einer Auswertelogik bewertet, wobei die Auswertung, abhängig von der bestehenden Konstellation, fehlerfreie oder fehlerbehaftete Konfigurationen zwischen den zwei Geräten ermittelt und diese Informationen über eine Schnittstelle zum Endbenutzer ausgegeben werden, um diesen über das Problem in der Gerätekonfiguration zu informieren.

4. Verfahren nach Anspruch 2 oder 3, **dadurch gekennzeichnet, dass** die lokalen Konfigurationsdaten zumindest eines Netzwerkinfrastrukturgerätes einer übergeordneten Netzwerkmanagement-Einheit zur Verfügung gestellt werden, um so über die lokalen Konfigurationsdaten netzwerkübergreifende Fehler zu erkennen.

5. Verfahren nach Anspruch 2, 3 oder 4, **dadurch gekennzeichnet, dass** die der Fehlererkennung nachgehende Fehlerbehebung durch einen Benutzer, insbesondere ein Systemadministrator, manuell durchgeführt wird.

6. Verfahren nach Anspruch 2, 3 oder 4, **dadurch gekennzeichnet, dass** die der Fehlererkennung nachgehende Fehlerbehebung automatisiert erfolgt.

## Claims

1. Method for recognizing incorrect configurations on network infrastructure devices, wherein a respective local network infrastructure device (1) provides information about its own configuration on its own network interface and uses a discovery protocol to send this information to its neighbouring network infrastructure devices (2 to 4), wherein the neighbouring network infrastructure devices (2 to 4) use the discovery protocol to transmit their configuration data to the local network infrastructure device (1), wherein also each network infrastructure device (1 to 4) takes from the network the configuration data received on its interfaces from the neighbouring network infrastructure devices in order to prevent them from being conveyed onward to other network infrastructure devices which are not neighbours in the sense of direct accessibility, wherein also the configuration data received by the local network infrastructure device (1) from the direct neighbouring network infrastructure devices (2 to 4) are stored in a memory unit on the local network infrastructure device (1) as a data structure, wherein the received data stored in the memory unit of the local network infrastructure device (1) from the direct neighbouring network infrastructure devices (2 to 4) are used for a comparison with the data from the local network infrastructure device (1).

2. Method according to Claim 1, **characterized in that** the discovery protocol is used to ascertain the information available in the memory unit for the interface on the neighbouring network infrastructure device and the interface on the neighbouring network infrastructure device and subsequently to evaluate the pieces of information against one another, which results in one of many possible arrangements for the interface configuration.

3. Method according to Claim 2, **characterized in that** these determined arrangements are assessed by an evaluation logic unit, wherein the evaluation, on the basis of the existing arrangement, ascertains error-free or erroneous configurations between the two devices, and this information is output to the end user via an interface in order to inform said end user about the problem in the device configuration.

4. Method according to Claim 2 or 3, **characterized in that** the local configuration data from at least one network infrastructure device are made available to a superordinate network management unit so as to use the local configuration data to recognize cross-network errors.

5. Method according to Claim 2, 3 or 4, **characterized in that** the error correction which succeeds the error recognition is performed manually by a user, particularly a system administrator.

6. Method according to Claim 2, 3 or 4, **characterized in that** the error correction which succeeds the error recognition takes place automatically.

## Revendications

1. Procédé de détection d'erreurs de configuration sur des appareils d'infrastructure de réseau, dans lequel un appareil d'infrastructure de réseau local (1) respectif fournit des informations concernant sa propre configuration à sa propre interface réseau et envoie au moyen d'un protocole de découverte ces informations à des appareils d'infrastructure de réseau voisins (2 à 4), dans lequel les appareils d'infrastructure de réseau voisins (2 à 4) transmettent par l'intermédiaire du protocole de découverte leurs données de configuration à l'appareil d'infrastructure de réseau local (1), dans lequel chaque appareil d'infrastructure de réseau (1 à 4) prélève en outre sur le réseau les données de configuration des appareils d'infrastructure de réseau voisins reçues sur son interface, afin d'empêcher leur réexpédition à d'autres appareils d'infrastructure de réseau qui ne sont pas voisins au sens où ils peuvent être directement accessibles, dans lequel les données de configuration des appareils d'infrastructure de réseau directement voisins (2 à 4) reçues des appareils d'infrastructure de réseau locaux (1) sont en outre stockées sous la forme d'une structure de données dans une unité à mémoire de l'appareil d'infrastructure de réseau local (1), dans lequel les données des appareils d'infrastructure de réseau directement voisins (2 à 4) reçues et stockées dans l'unité à mémoire de l'appareil d'infrastructure de réseau local (1) sont utilisées en vue d'une comparaison aux données de l'appareil d'infrastructure de réseau local (1).

2. Procédé selon la revendication 1, **caractérisé en ce que** les informations présentes dans l'unité à mémoire pour l'interface sont obtenues par l'intermédiaire du protocole de découverte, pour l'interface de l'appareil d'infrastructure de réseau interrogé et pour l'interface de l'appareil d'infrastructure de réseau voisin et **en ce que** les informations sont ensuite évaluées les unes par rapport aux autres, cela conduisant à une configuration d'interface parmi de multiples constellations possibles.

3. Procédé selon la revendication 2, **caractérisé en ce que** ces constellations établies sont évaluées par une logique d'évaluation, l'évaluation déterminant, en fonction de la constellation existante, des configurations exemptes d'erreurs ou affectées d'erreurs entre les deux appareils et **en ce que** ces informations sont délivrées par l'intermédiaire de l'interface à l'utilisateur final afin d'informer ce dernier du problème affectant la configuration de l'appareil.

4. Procédé selon la revendication 2 ou 3, **caractérisé en ce que** les données de configuration locales d'au moins un appareil d'infrastructure de réseau sont fournies à une unité de gestion de réseau de niveau supérieur afin de détecter les erreurs globales de réseau par l'intermédiaire des données de configuration locales.

5. Procédé selon la revendication 2, 3 ou 4, **caractérisé en ce que** la correction d'erreur faisant suite à la détection d'erreur est effectuée manuellement par l'utilisateur, notamment par un administrateur système.

6. Procédé selon la revendication 2, 3 ou 4, **caractérisé en ce que** la correction d'erreur faisant suite à la détection d'erreur est effectuée automatiquement.
